# EUROPEAN PATENT SPECIFICATION

(11) **EP 3 774 269 B1**
(45) Date of publication and mention of the grant of the patent: **16.11.2022**
(21) Application number: 19711662.7
(22) Date of filing: 06.03.2019
(51) Int. Cl.: B29C 48/00, B29B 7/24, B29B 7/60, B29B 7/74, C08J 3/22, C09C 1/00, C08K 5/00, C09C 1/24, C08K 3/22, B29B 7/88, B29K 105/00, B29B 7/00, B29B 9/06, B29K 91/00, B29K 101/12

(54) **BLACK COLOURANT AND MANUFACTURING METHOD THEREOF**
SCHWARZER FARBSTOFF UND HERSTELLUNGSVERFAHREN DAVON
COLORANT NOIR ET SON PROCÉDÉ DE FABRICATION

(30) Priority: 11.04.2018 GB 201805958
(43) Date of publication of application: 17.02.2021
(73) Proprietor: Colour Tone Masterbatch Limited, Cardiff, South Glamorgan CF83 8BJ (GB)
(72) Inventor: MORGAN, Kevin, Cardiff South Glamorgan CF83 8BJ (GB)
(74) Representative: Baker, Thomas Edward
(86) International application number: PCT/GB2019/050617
(87) International publication number: WO 2019/197796

(56) References cited:
- EP-A1- 2 716 721
- JP-A- 2012 144 675
- US-A1- 2004 044 119
- US-A1- 2004 156 986

## Description

The present invention relates to a colourant for darkening the colour tone of a target polymer or of a colourant for addition to a polymer.

A significant problem exists with recycling of polymers and particularly plastics which are the most common waste polymeric material, whereby the cost of recycling can typically be higher than the cost of producing new plastic product. A significant part of this problem arises as a result of sorting different waste plastic into plastic types such that plastics having the same or similar compositions are separated such that they can be recycled into a satisfactory product.

Developments in the optical sorting of plastics using Near Infra Red [NIR] spectroscopy of the absorbed and reflected light from mixed plastics has enabled this method to become extremely accurate. The process has resulted in significant automation and increased throughputs in the sorting process. Typically analysing reflected NIR in the 600 - 2800 nm waveband, the technology will identify most plastics. It is even capable of differentiating between high density (HD) and low density (LD) polyethylene, and sorting flame retardant (FR) grades from mixed feed stocks. Coupling the NIR technology with optical scanning in the visual wavelengths means that clear and coloured plastics can also be automatically sorted on a commercial scale.

However, a major limitation of this process was the recognition of black and other coloured plastics that absorb IR. Traditionally black plastics are coloured with carbon black, a very good absorber of IR, so there is no reflected NIR for analysis by the sorter. In effect the system is blinded and hence unable to identify the polymer. The same applies for other complex colours containing carbon black and/or other IR absorbing pigments. As a result mixed polymer recylate containing IR absorbing materials can only be manually sorted or disposed of as mixed plastic waste. IR reflective pigments can now be incorporated into the prime polymer when being initially processed to enable it to be automatically sorted by this process. End of life considerations are now becoming part of the design criteria. This is of particular interest to the packaging industry where there is more emphasis being put on the practicalities of recycling and also the electrical and automotive industries where there already is end of life legislation within the European Union.

GB2534594 discloses a reduced NIR absorbing black colourant thereby enabling polymeric products into which the colourant is provided to be sorted using IR sorting techniques whilst retaining the preferred black colour of the product.

US2004/0044119 discloses pigmentation formulations comprising at least two different pigments and at least one thermoplastic polymer for colouration of plastics.

A problem with the use of the colourant as presented in GB2534594 is the use of green shade iron chrome oxide as a first pigment in the colourant presents uncertainty in certain jurisdictions as to whether it may be compliant to be used in foodstuff packaging in particular. A further problem is that green shade iron chrome oxide is expensive thereby increasing the overall cost of a polymeric product into which the colourant is present. The present invention thus addresses the need to achieve the multiple requirements of achieving a high quality 'black' colour of a polymer into which the colourant is added, be capable of being recycled using IR sorting technology, be widely accepted as being suitable for use as a colourant in foodstuff packaging, and must be of low cost. The present invention addresses this complex requirement.

According to the present invention there is a black colourant for darkening the colour tone of a target polymer or polymer colourant as defined in claim 1.

The first and at least one additional pigment are selected such that in combination with the carrier material they produce a substantially black colour tone. This colour tone is then transferred to a target polymer or polymer colourant.

It has been determined by the applicant that instead of using green shade iron chrome oxide as a component of a colourant for darkening and often blackening the colour tone of a target polymer or target colourant, black shade manganese oxide together with at least one additional pigment ( comprising at least brown shade metal oxide pigment) can be utilised, whether as a component of a colourant for addition to downstream polymer, or whether as a colourant for direct addition to a target polymer.

The incorporation of a pigment of manganese oxide and brown shade metal oxide has a surprising effect on the black colourant as achieves all of the requirements for achieving a black colourant and when combined into a host polymer has a high quality black appearance. Furthermore a polymer incorporating such a colourant can be sorted using IR sorting techniques, is widely accepted as being acceptable for use as a colourant in foodstuff packaging, and is of relatively low cost, particularly in comparison to use of the known and currently used chrome oxides.

The use of the claimed colourant means that a plastic into which it has been added can be readily used as a regulatory acceptable colourant for foodstuff packaging, and also identified using IR or near-IR analysis. Manganese oxide is known to have at best average IR reflectance properties and is therefore not typically used for applications in which this is a requirement. In addition, although black shade manganese oxide is a known pigment, it provides a poor quality black shade in the visible wavelength region when added to a target polymer. Instead, manganese oxide/metal oxide pigments are typically utilised for incorporation into ceramics such as roof tiles or concrete products where they are utilised for the ability to have high heat stability and robustness. Accordingly, black shade manganese oxide would not be considered as a pigment where a high quality black plastic product is required, and in particular where a combination of the ability to achieve a high quality black in a target product combined with capability to sort using IR sorting is required.

It has been found that by providing black shade manganese oxide pigment in combination with at least brown shade metal oxide pigment and a carrier, the colourant enables the polymer into which it is used to be positively identified using automated IR sorting techniques and achieves a high quality black appearance.

The first pigment is preferably a manganese oxide blend comprising a combination of manganese oxide and a further metal oxide. The blend is preferably a synthetic blend. The further metal oxide preferably comprises a transition metal oxide. The further metal oxide is preferably selected from the group comprising iron oxide and/or calcium oxide and/or vanadium oxide. The further metal oxide is preferably iron oxide as provides a beneficial combination of lower cost and effectiveness.

The first pigment may comprise a commercially available pigment, known as 'Pigment Black 33'.

The or one of the additional pigments comprises a brown shade manganese oxide. The addition of this second pigment, has been found to transform the colorant from providing what may be termed a 'dirty' or 'poor quality' black colourant resulting from the black shade manganese oxide into a high quality black colourant. The, or one of the, additional pigments may comprise a brown shade manganese oxide blend comprising a combination of manganese oxide and a further metal oxide. The blend is preferably a synthetic blend. The further metal oxide preferably comprises a transition metal oxide. The further metal oxide is preferably selected from the group comprising iron oxide and/or calcium oxide and/or vanadium oxide. The further metal oxide is preferably iron oxide.

The or one of the additional pigments may comprise a commercially available pigment, known as 'Pigment Brown 43'.

The colourant preferably comprises a plurality of additional pigments including at least brown shade, blue shade and green shade pigments. The additional pigments may be referred to as tinting pigments. The additional pigments are each beneficially substantially non-infrared absorbent. The addition of such a pigments gives improved fine control of the aesthetic appearance of the polymeric product into which the colourant has been added. This provides beneficial fine control appearance properties and is also a cost effective addition. The blue shade and preferably green shade pigments may comprise phthallocynate.

The relative weight percentages of first and second pigments are selected such that in combination with the carrier material they produce a substantially black colour tone.

The first pigment beneficially includes a further metal oxide, preferably iron oxide. Although a pigment comprising manganese oxide can be utilised in isolation, blending with iron oxide provides processing benefits by improving dispersion in a polymer into which it is added.

As defined above the first and optionally one or more second pigments each may comprise a combination of a manganese oxide and a second metal oxide. The combination of manganese oxide and second metal oxides may be a blend or a complex crystal lattice.

The colourant may beneficially be termed a masterbatch when in the form of a solid at room temperature and pressure. The solid masterbatch is beneficially granular.

The polymer is beneficially a plastic. Household waste packaging is typically plastic and includes as example only film, natural HDPE (high-density polyethylene), natural PET (polyethylene terephthalate), coloured HDPE, coloured PET and PP (polypropylene).

The carrier material beneficially comprises a binder. The colourant is beneficially in the form of a solid at room temperature and pressure and forms a composite. The first and preferably second pigments and carrier material are beneficially dispersed in the solid, and may be supplied for addition to a target polymer or subsequent colourant in the form of solid items such as pellets. The term colourant is used to cover at least pigments and dyes, and provides colour to a polymeric product.

The carrier material preferably comprises a polymer and is preferably selected to match or be compatible with the chemical composition of a target polymer.

It is possible that in some embodiments for use as a colourant for particular polymers it may be beneficial that the carrier comprises a liquid. The liquid may comprise a surfactant and/or a diluent. The liquid may comprise a blend of surfactants and/or diluents. Such liquids may be derivatives of sorbitan esters or polyisobutylene.

It is possible that the carrier material may comprise a wax.

The carrier material is preferably selected to match the chemical composition of a target polymer. This means that the colourant will readily mix and bond with the target polymer into which it will provide colour.

The first and one or more additional pigments are beneficially inorganic. It has been determined that inorganic first and one or more additional pigments are beneficial to ensure covering power, and also provide capability of a waste polymer for IR or near-IR sorting.

The weight percent of the first pigment in the colourant is beneficially greater than the weight percent of the one or more additional pigments in the colourant. This has been determined to provide improved darkening properties. Beneficially, the first pigment forms between 20 weight percent and 65 weight percent of the colourant. Even more beneficially, the first pigment forms between 40 weight percent and 60 weight percent of the colourant, and preferably the first pigment forms between 45 weight percent and 55 weight percent of the colourant. The exact weight percent may be different for different colourant formulations dependent upon the polymer coloured. For example, if the colourant is to be added to a target polymer comprising polyester, the approximate weight percent of the first pigment is 50%. The carrier in this regard is beneficially PET (polyethylene terephthalate). The weight percent may be increased if the colourant is designed for addition to polypropylene.

The one or more additional pigments beneficially forms between 3 and 20 weight percent of the colourant. Preferably, the second pigment forms between 5 and 12 weight percent of the colourant. In the example as described as above where the colourant is to be added to polyester, the second pigment beneficially forms 8 weight percent of the colourant. The one or more additional pigments beneficially comprise a plurality of pigments comprising green shade, blue shade and brown shade pigments. The relative weight percentages of each may be in the order of 2% each as each have strong tinting effects.

The carrier material may form between 35 and 60 weight percent of the colourant. In the embodiment described above the carrier material may comprise approximately 40 weight percent of the colourant.

The black colourant may include one or more performance enhancing additives. These may include one or more of an antioxidant, anti-static, UV stabiliser or metal deactivators.

In the event that the black colourant is solid at room temperature and pressure, such a colourant may be termed a multi-functional masterbatch.

The present invention extends to a method of manufacturing a black colourant for darkening the colour tone of a target polymer or polymer colourant as defined in claim 20. The relative weight percentages of the first and one or more additional pigments are selected such that in combination with the carrier material they produce a substantially black colour tone.

Also according to the present invention there is a method of darkening the colour tone of a target polymer or polymer colourant as defined in claim 15.

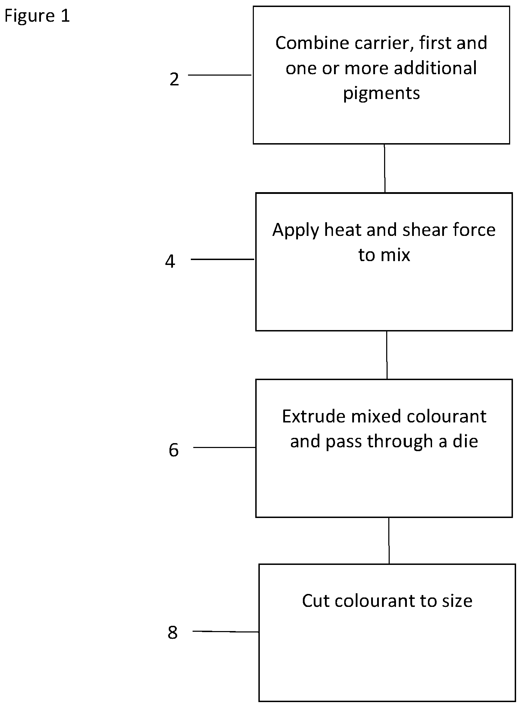

The present invention will now be described by way of illustration only with reference to figure 1 which is a schematic flow diagram of processing of a black colourant according to any illustrative embodiment of the invention.

The present invention has been found to provide an effective substantially black colourant for polymeric, preferably plastic materials enabling them to be appropriately sorted for recycling after use. Generally such colourant is added in the range of less than 1% to 8% depending on the required application. Such applications can be as varied as food containers which may be designed to be microwavable, to car interior dashboards. However, a significant advantage associated with the present invention is that the effectiveness of black colouring of the polymer into which the black colourant is achieved whilst IR sorting capability is maintained. Furthermore, a pigment comprising a combination of a first metal oxide comprising manganese oxide and a second metal oxide is significantly cheaper than one comprising green shade iron chrome oxide and whilst also being suitable for food packing. This combination of properties is extremely beneficial as food packaging in particular results in significant volumes of waste material.

The black colourant may be in a variety of forms, however is most commonly provided for use as a solid material where the carrier, first and one or more additional solid pigments are combined to and mixed by applying a shear force and heated to cause melting of the carrier material 4. The material is then passed through an extruder and die 6, and formed into a composite solid. The solid is then cut into particles 8, typically pellets. This pellet colourant is then added to virgin or waste plastic for onward forming into black or substantially black products. Alternatively, the pellet colourant is added as part of a colourant mix for forming of another colourant. Such a colourant may be varied in tone, from relatively light colour tone to dark colour tone.

It is important in the present invention that after the useful life of the polymer product, recyclability is enabled using automated IR sorting techniques.

The precise black colourant formulations vary from the downstream polymer to which they will be added. One example is a masterbatch for polyester which is a blend of black shade manganese oxide including iron oxide totalling approximately 50% and brown shade manganese oxide blend (manganese oxide including iron oxide) of approximately 8 weight %. An additional colourant is also added comprising three organic pigment tinters (red, green and blue) at 10 weight % of the total formulation. Approximately 35% of the formulation is then made up of carrier material. This makes an extremely aesthetically pleasing black where the first pigment, second pigment, carrier material and tinting colourant are dispersed in a PET or thermoplastic polyester carrier.

Another example is a black colourant comprising 50 weight % manganese oxide/iron oxide blend, 40 weight % carrier material, and 6 weight % additional pigment made up of 2 weight % brown shade manganese oxide/iron oxide blend, 2 weight % green shade pigment (phthallocynate), and 2 weight % blue shade pigment (phthallocynate).

Also added are for example desiccants as a processing additive such as calcium oxide of approximately 3-4% and metallic soaps such as calcium stearates and/or waxes chosen dependent on the polymer into which they might be added. An example would be montan or ethylene wax dependent on polymer. The provision of a blended tinting colourant has been found to provide significant benefits in aesthetic appearance and may include a blend of red, green and blue organic pigments.

A further example is a masterbatch designed for polypropylene which has an increased weight percentage of black shade manganese oxide that utilises the same additional pigment combination comprising red, blue and green organic pigments. These make ratios of the pigments making up the tinting colourant again are typically adapted dependent upon the polymer into which the colourant is to be eventually included. The carrier material, first pigment, one or more additional pigments and tinting colourant are dispersed in a polyolefin carrier.

It will be appreciated that such black colourants may be utilised for many polymers such as polystyrene, polyethylene etc.

## Claims

1. A black colourant for darkening the colour tone of a target polymer or polymer colourant, the black colourant being a mixture comprising:
- a carrier material;
- a first pigment comprising at least black shade manganese oxide;
- at least one additional pigment; wherein the or one of the additional pigments comprises a brown shade metal oxide pigment.

2. A black colourant according to claim 1 wherein the first and at least one additional pigment are selected such that in combination with the carrier material produce a substantially black colour tone.

3. A black colourant according to claim 1 wherein the first pigment comprises a manganese oxide blend comprising a combination of manganese oxide and a further metal oxide.

4. A black colourant according to claim 2 wherein the further metal oxide is selected from the group comprising iron oxide and/or calcium oxide and/or vanadium oxide.

5. A black colourant according to any of claims 2-3 where the further metal oxide comprises iron oxide.

6. A black colourant according to claim 1 wherein the brown shade metal oxide pigment comprises manganese oxide; and preferably wherein the or one of the additional pigments comprises a blend of brown shade manganese oxide pigment and a further metal oxide; and optionally wherein the further metal oxide comprises iron oxide.

7. A black colourant according to any preceding claim comprising a plurality of additional pigments including at least brown shade, blue shade and green shade pigments; and preferably wherein the blue shade and preferably green shade pigments comprise phthallocynate.

8. A black colourant according to any preceding claim wherein the carrier material comprises a polymer; and/or wherein the carrier material comprises a liquid at ambient temperature; and/or wherein the carrier material forms between 35 and 60 weight percent of the colourant.

9. A black colourant according to of claims 1-8 wherein the carrier material comprises a wax.

10. A black colourant according to any preceding claim wherein the weight percent of the first pigment in the colourant is greater than the weight percent of the one or more additional pigments in the colourant.

11. A black colourant according to claim 10 wherein the first pigment forms between 20 weight percent and 65 weight percent of the colourant.

12. A black colourant according to claim 11 wherein the first pigment forms between 40 and 60 weight percent of the colourant, and even more preferably between 45 weight percent and 55 weight percent of the colourant.

13. A black colourant according to any of claims 10-12 wherein the one or more additional pigments form between 3 and 20 weight percent of the colourant.

14. A black colourant according to claim 13 wherein the one or more additional pigments form between 5 and 12 weight percent of the colourant.

15. A method of manufacturing a black colourant for darkening the colour tone of a target polymer or polymer colourant, the method comprising the steps of mixing:
- a carrier material;
- a first pigment comprising at least black shade manganese oxide;
- at least one additional pigment wherein the or one of the additional pigments comprises a brown shade metal oxide pigment.

## Patentansprüche

1. Schwarzer Farbstoff zum Abdunkeln des Farbtons eines Zielpolymers oder Polymerfarbstoffs, wobei der schwarze Farbstoff eine Mischung ist, welche umfasst:
- ein Trägermaterial;
- ein erstes Pigment, umfassend mindestens schwarz getöntes Manganoxid;
- mindestens ein zusätzliches Pigment; wobei das oder eines der zusätzlichen Pigmente ein braun getöntes Metalloxidpigment umfasst.

2. Schwarzer Farbstoff nach Anspruch 1, wobei das erste und mindestens ein zusätzliches Pigment so gewählt sind, dass sie in Kombination mit dem Trägermaterial einen im Wesentlichen schwarzen Farbton produzieren.

3. Schwarzer Farbstoff nach Anspruch 1, wobei das erste Pigment ein Manganoxidgemisch umfasst, umfassend eine Kombination aus Manganoxid und einem weiteren Metalloxid.

4. Schwarzer Farbstoff nach Anspruch 2, wobei das weitere Metalloxid ausgewählt ist aus der Gruppe, die Eisenoxid und/oder Calciumoxid und/oder Vanadiumoxid umfasst.

5. Schwarzer Farbstoff nach einem der Ansprüche 2 bis 3, wobei das weitere Metalloxid Eisenoxid umfasst.

6. Schwarzer Farbstoff nach Anspruch 1, wobei das braun getönte Metalloxidpigment Manganoxid umfasst; und wobei vorzugsweise das oder eines der zusätzlichen Pigmente ein Gemisch aus braun getöntem Manganoxidpigment und einem weiteren Metalloxid umfasst; und wobei das weitere Metalloxid gegebenenfalls Eisenoxid umfasst.

7. Schwarzer Farbstoff nach einem der vorhergehenden Ansprüche, umfassend eine Vielzahl zusätzlicher Pigmente einschließlich mindestens braun getönten, blau getönten und grün getönten Pigmenten; und wobei die blau getönten und vorzugsweise grün getönten Pigmente vorzugsweise Phthalocyanat umfassen.

8. Schwarzer Farbstoff nach einem der vorhergehenden Ansprüche, wobei das Trägermaterial ein Polymer umfasst; und/oder wobei das Trägermaterial eine Flüssigkeit bei Umgebungstemperatur umfasst; und/oder wobei das Trägermaterial zwischen 35 und 60 Gewichtsprozent des Farbstoffs stellt.

9. Schwarzer Farbstoff nach einem der Ansprüche 1 bis 8, wobei das Trägermaterial ein Wachs umfasst.

10. Schwarzer Farbstoff nach einem der vorhergehenden Ansprüche, wobei der Gewichtsprozentsatz des ersten Pigments in dem Farbstoff größer als der Gewichtsprozentsatz des einen oder der mehreren zusätzlichen Pigmente in dem Farbstoff ist.

11. Schwarzer Farbstoff nach Anspruch 10, wobei das erste Pigment zwischen 20 Gewichtsprozent und 65 Gewichtsprozent des Farbstoffs stellt.

12. Schwarzer Farbstoff nach Anspruch 11, wobei das erste Pigment zwischen 40 und 60 Gewichtsprozent des Farbstoffs stellt, und noch bevorzugter zwischen 45 Gewichtsprozent und 55 Gewichtsprozent des Farbstoffs stellt.

13. Schwarzer Farbstoff nach einem der Ansprüche 10 bis 12, wobei das eine oder die mehreren zusätzlichen Pigmente zwischen 3 und 20 Gewichtsprozent des Farbstoffs stellen.

14. Schwarzer Farbstoff nach Anspruch 13, wobei das eine oder die mehreren zusätzlichen Pigmente zwischen 5 und 12 Gewichtsprozent des Farbstoffs stellen.

15. Verfahren zur Fertigung eines schwarzen Farbstoff zum Abdunkeln des Farbtons eines Zielpolymers oder Polymerfarbstoffs, wobei das Verfahren die Schritte des Mischens von:
- einem Trägermaterial;
- einem ersten Pigment, umfassend mindestens schwarz getöntes Manganoxid;
- mindestens einem zusätzlichen Pigment umfasst; wobei das oder eines der zusätzlichen Pigmente ein braun getöntes Metalloxidpigment umfasst.

## Revendications

1. Colorant noir pour l'assombrissement du ton coloré d'un polymère ou colorant de polymère cible, le colorant noir étant un mélange comprenant :
- un matériau de support ;
- un premier pigment comprenant au moins de l'oxyde de manganèse de nuance noire ;
- au moins un pigment supplémentaire ; le pigment ou l'un des pigments supplémentaires comprenant un pigment d'oxyde métallique de nuance brune.

2. Colorant noir selon la revendication 1, le premier pigment et l'au moins un pigment supplémentaire étant choisis de sorte qu'en combinaison avec le matériau de support, ils produisent un ton coloré sensiblement noir.

3. Colorant noir selon la revendication 1, le premier pigment comprenant un mélange d'oxyde de manganèse comprenant une combinaison d'oxyde de manganèse et d'un oxyde métallique supplémentaire.

4. Colorant noir selon la revendication 2, l'oxyde métallique supplémentaire étant choisi dans le groupe comprenant un oxyde de fer et/ou un oxyde de calcium et/ou un oxyde de vanadium.

5. Colorant noir selon l'une quelconque des revendications 2 et 3 dans lequel l'oxyde métallique supplémentaire comprend un oxyde de fer.

6. Colorant noir selon la revendication 1, le pigment d'oxyde métallique de nuance brune comprenant un oxyde de manganèse ; et préférablement, le pigment ou l'un des pigments supplémentaires comprenant un mélange de pigment d'oxyde de manganèse de nuance brune et d'un oxyde métallique supplémentaire ; et éventuellement, l'oxyde métallique supplémentaire comprenant un oxyde de fer.

7. Colorant noir selon une quelconque revendication précédente comprenant une pluralité de pigments supplémentaires comprenant au moins des pigments de nuance brune, de nuance bleue et de nuance verte ; et préférablement, les pigments de nuance bleue et préférablement les pigments de nuance verte comprenant un phtallocynate.

8. Colorant noir selon une quelconque revendication précédente, le matériau de support comprenant un polymère ; et/ou le matériau de support comprenant un liquide à température ambiante ; et/ou le matériau de support formant entre 35 et 60 pour cent en poids du colorant.

9. Colorant noir selon l'une quelconque des revendications 1 à 8, le matériau de support comprenant une cire.

10. Colorant noir selon une quelconque revendication précédente, le pourcentage en poids du premier pigment dans le colorant étant supérieur au pourcentage en poids du ou des pigments supplémentaires dans le colorant.

11. Colorant noir selon la revendication 10, le premier pigment formant entre 20 pour cent en poids et 65 pour cent en poids du colorant.

12. Colorant noir selon la revendication 11, le premier pigment formant entre 40 et 60 pour cent en poids du colorant, et encore plus préférablement entre 45 pour cent en poids et 55 pour cent en poids du colorant.

13. Colorant noir selon l'une quelconque des revendications 10 à 12, le ou les pigments supplémentaires formant entre 3 et 20 pour cent en poids du colorant.

14. Colorant noir selon la revendication 13, le ou les pigments supplémentaires formant entre 5 et 12 pour cent en poids du colorant.

15. Procédé de fabrication d'un colorant noir pour l'assombrissement du ton coloré d'un polymère ou colorant de polymère cible, le procédé comprenant les étapes de mélange :
- d'un matériau de support ;
- d'un premier pigment comprenant au moins un oxyde de manganèse de nuance noire ;
- d'au moins un pigment supplémentaire, le pigment ou l'un des pigments supplémentaires comprenant un pigment d'oxyde métallique de nuance brune.
